# EUROPÄISCHE PATENTSCHRIFT

(11) **EP 1 748 334 B1**
(45) Veröffentlichungstag und Bekanntmachung des Hinweises auf die Patenterteilung: **05.03.2008**
(21) Anmeldenummer: 05016231.2
(22) Anmeldetag: 26.07.2005
(51) Int. Cl.: G05B 19/042, G05B 19/418

(54) **Verfahren und Anordnung zur Überwachung eines Übertragungsmediums**
Method and device for supervising a transmission medium
Procédé et dispositif pour surveiller un milieu de transmission

(43) Veröffentlichungstag der Anmeldung: 31.01.2007
(73) Patentinhaber: SIEMENS AKTIENGESELLSCHAFT, 80333 München (DE)
(72) Erfinder: Polzer, Kurt, 72108 Rottenburg (DE)

(56) Entgegenhaltungen:
- DE-A1- 19 834 863
- US-A- 5 650 777

## Beschreibung

Die Erfindung betrifft ein Verfahren zur Überwachung eines Übertragungsmediums, über welches ein erster Teilnehmer mit einem zweiten Teilnehmer verbindbar ist und über welches ein Stromsignal und ein diesem Stromsignal überlagertes digitales Kommunikationssignal übertragbar sind. Darüber hinaus betrifft die Erfindung eine Anordnung, welche zur Durchführung eines derartigen Verfahrens geeignet ist, und einen Teilnehmer für eine derartige Anordnung.

Ein Verfahren der eingangs genannten Art ist beispielsweise aus dem Siemens-Katalog SIMATIC PCS7, Kapitel 12, Ausgabe 2005 bekannt. Dort ist eine so genannte HART (Highway Adressable Remote Transducer)-Kommunikation beschrieben, durch welche über konventionelle 4 bis 20 mA-Technik Feldgeräte flexibel parametrierbar sind. Diese Technik zeichnet sich dadurch aus, dass auf einem Leitungspaar sowohl das analoge 4 bis 20 mA-Stromsignal als auch das digitale Kommunikationssignal übertragbar ist, wobei zur Überlagerung des digitalen Kommunikationssignals auf dem analogen 4 bis 20 mA-Signal und zur Bitkodierung ein so genanntes FSK (Frequency Shift Key)-Verfahren eingesetzt wird. Einer logischen "0" wird ein eine Frequenz von 2200 Hz aufweisendes analoges Signal und einer logischen "1" ein eine Frequenz von 1200 Hz aufweisendes analoges Signal zugeordnet.

Gewöhnlich werden Feldgeräte in ungeschützter Umgebung eingesetzt, wodurch einerseits diese Feldgeräte und andererseits die Leitungspaare, über welche die Feldgeräte mit den Ein-/Ausgabebaugruppen einer Automatisierungseinrichtung verbunden sind, erheblichen Witterungs- und Umwelteinflüssen ausgesetzt sind. Diese Einflüsse wirken sich störend auf die Übertragungsqualität der zwischen Feldgeräten und Baugruppen zu übertragenden Signale aus, aufgrund dessen Messwerte verfälscht werden und gefährliche Betriebszustände während der Steuerung eines technischen Prozesses eintreten können.

Um dies zu verhindern, ist es erforderlich, die Qualität des Übertragungsweges zu überprüfen, z. B. in der Art und Weise, dass ein von einem Sensor angezeigter Strom an der Ein-/Ausgabebaugruppe manuell gemessen und mit dem angezeigten Strom verglichen wird.

Aus der US 5,650,777 ist eine Schaltungsanordnung für ein Prozesssteuerungssystem bekannt. Dort sind Maßnahmen zur Übertragung eines digitalen und eines dazu repräsentativen analogen Signals vorgesehen.

DE 198 34 863 A1 offenbart ein Verfahren zur sicheren Datenübertragung zwischen einer numerischen Steuerung und einem räumlich getrennten Gerät, wobei geeignete Maßnahmen eine schnelle Datenübertragung ermöglichen.

Der vorliegenden Erfindung liegt die Aufgabe zugrunde, ein Verfahren der eingangs genannten Art anzugeben, mit welchem eine Überwachung eines Übertragungsmediums vereinfacht wird. Darüber hinaus ist eine Anordnung zu schaffen, welche zur Durchführung eines derartigen Verfahrens geeignet ist, und ferner ein Teilnehmer für eine derartige Anordnung.

Im Hinblick auf das Verfahren wird die Aufgabe durch die im kennzeichnenden Teil des Anspruchs 1 angegebenen, im Hinblick auf die Anordnung durch die im kennzeichnenden Teil des Anspruchs 3 angegebenen und im Hinblick auf den Teilnehmer durch die im kennzeichnenden Teil des Anspruchs 5 angegebenen Maßnahmen gelöst.

Vorteilhaft ist, dass eine automatische Überprüfung des Übertragungsmediums erfolgt. Das Vergleichsergebnis kann in einem übergeordneten so genannten Asset Management System weiterverarbeitet werden, um in einer Diagnose- und Instandhaltungssicht einem Anwender Informationen über den Abnutzungsgrad des Übertragungsmediums zu geben, wobei dem Anwender durch dieses Asset Management System ferner geeignete Instandhaltungsmaßnahmen vorgeschlagen werden.

Die Erfindung geht von der Idee aus, dass das einen Messwert oder Sollwert repräsentierende digitale Kommunikationssignal weitgehend unabhängig ist von der Qualität eines Übertragungsmediums. Weicht der aus dem Kommunikationssignal ermittelte Messwert oder Sollwert von dem einen Messwert oder Sollwert repräsentierenden Stromsignal ab, so weist dies auf einen Fehler des Übertragungsmediums hin.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: eine dezentrale Peripherieeinheit und
- Figur 2: ein Prozessleitsystem.

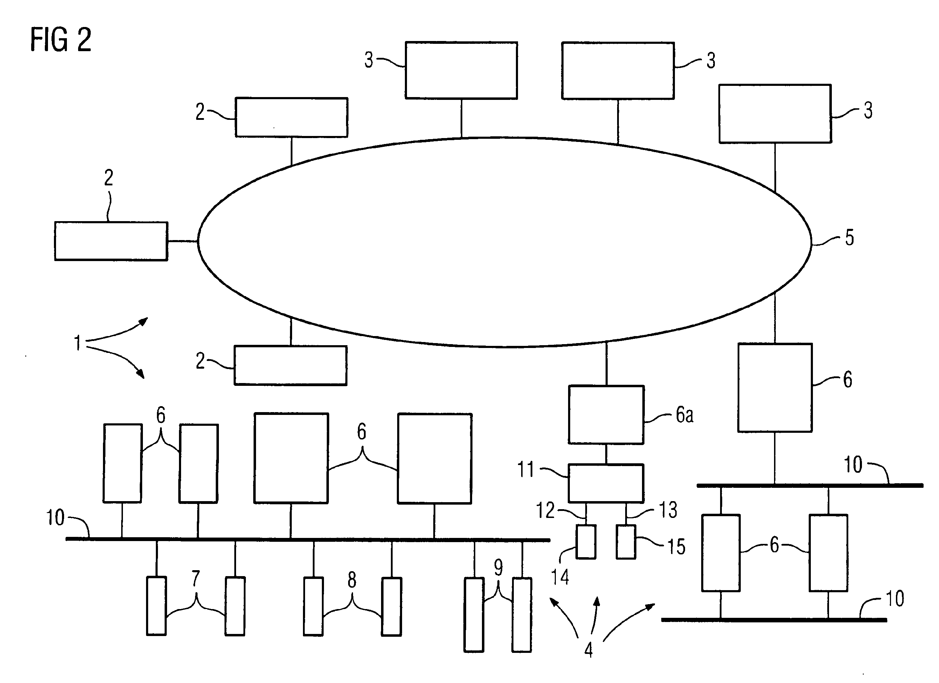

Zunächst wird auf Figur 2 verwiesen, in welcher ein an sich bekanntes Prozessleitsystem 1 dargestellt ist. Dieses Prozessleitsystem 1 weist ein Engineeringsystem 2, ein Bedien- und Beobachtungssystem 3 und eine projektierte und konfigurierte Automatisierungseinrichtung 4 auf, wobei das Engineeringsystem 2 zur Projektierung und/oder Konfigurierung der Automatisierungseinrichtung 4 vorgesehen ist. Die Automatisierungseinrichtung 4, welche über ein Bussystem 5 und hier nicht dargestellte Busanschaltungen mit dem Engineeringsystem 2 und dem Bedien- und Beobachtungssystem 3 verbunden ist, umfasst unterschiedliche Automatisierungsgeräte 6, 6a, ferner Aktoren 7 und Sensoren 8 sowie weitere zur Steuerung einer technischen Anlage erforderliche Automatisierungskomponenten 9. Die Automatisierungsgeräte 6, welche über das Bussystem 5 und/oder weitere geeignete Bussysteme 10 miteinander verbunden sind, können unterschiedlich ausgebildet sein. So sind gewöhnlich Automatisierungsgeräte zur Lösung kleiner, mittlerer und größerer Automatisierungsaufgaben innerhalb der Automatisierungseinrichtung 4 vorgesehen, wobei zur Lösung kleiner Automatisierungsaufgaben mikro-speicherprogrammierbare Steuerungen, zur Lösung mittlerer Automatisierungsaufgaben speicherprogrammierbare Kleinsteuerungen und zur Lösung komplexerer Automatisierungsaufgaben leistungsstarke speicherprogrammierbare Steuerungen einsetzbar sind. Das Prozessleitsystem ist ferner mit einer so genannten dezentralen Peripherieeinheit 11 versehen, welche einerseits an eine Master-Baugruppe des Automatisierungsgeräts 6a angeschlossen ist und welche andererseits jeweils über eine Peripheriebaugruppe und ein Leitungspaar 12, 13 mit einem Sensor 14 und einem Aktuator 15 verbunden ist, wobei die an sich bekannte 4 bis 20 mA-Technik gemäß HART-Spezifikation eingesetzt wird.

Mit welchen Hard- und Softwarekomponenten, d. h. mit welchen Automatisierungsgeräten, Bedien- und Beobachtungsgeräten, Bussystemen, Aktuatoren und Sensoren, und mit welchen Steuerprogrammen die Automatisierungseinrichtung 4 zu versehen ist, ist abhängig von der Komplexität der zu steuernden technischen Anlage und der Steueraufgabe, wobei die erforderlichen Hard- und Softwarekomponenten der Automatisierungseinrichtung 4 durch das Engineeringsystem 2 projektierbar und/oder konfigurierbar sind.

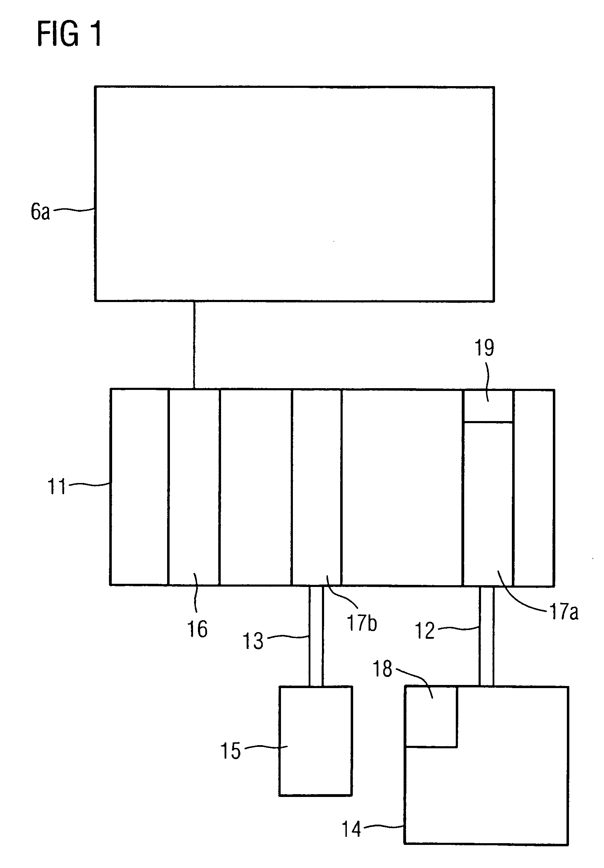

Es kann nun vorkommen, dass Witterungs- und Umwelteinflüsse sich störend auf die Übertragungsqualität des über das Leitungspaar 12 vom Sensor 14 an die Master-Baugruppe des Automatisierungsgeräts 6a zu übertragenden Stromes auswirken können. Um die Qualität des Leitungspaares 12 zu überwachen, sind daher Maßnahmen vorgesehen, die im Folgenden näher erläutert werden. Dazu wird auf Figur 1 verwiesen, in welcher die dezentrale Peripherieeinheit 11 gemäß Figur 2 dargestellt ist. Die dezentrale Peripherieeinheit 11 ist mit einer Master-Baugruppe 16 versehen, über welche die dezentrale Peripherieeinheit 11 an das Automatisierungsgerät 6a angeschlossen ist. Ferner weist die dezentrale Peripherieeinheit 11 eine Analogeingabebaugruppe 17a und eine Analogausgabebaugruppe 17b auf, wobei an die Analogeingabebaugruppe 17a über das Leitungspaar 12 der Sensor 14 und an die Analogausgabebaugruppe 17b über das Leitungspaar 13 der Aktuator 15 angeschlossen ist. Die dezentrale Peripherieeinheit 11 kann selbstverständlich weitere Analogeingabe- und/oder Analogausgabebaugruppen zum Anschluss weiterer Sensoren und/oder Aktuatoren aufweisen.

Im Folgenden wird angenommen, dass die Analogeingabebaugruppe 17a den Sensor 14, z. B. ein Sensor in Form eines Temperatur-Messumformers, mit einer konstanten Spannung versorgt. Aufgrund dieser Versorgungsspannung und aufgrund einer gemessenen Temperatur eines Heizkessels fließt von dem Temperatur-Messumformer zur Analogeingabebaugruppe 17a ein einen Messwert repräsentierender Strom, aus welchem ein Mikrocontroller 18 des Temperatur-Messumformers den Messwert ermittelt. Der Temperatur-Messumformer übermittelt der Analogeingabebaugruppe 17a ferner über das Leitungspaar 12 ein diesem Messwert repräsentierendes und dem Strom überlagertes digitales Kommunikationssignal, wobei eine Auswerteeinheit 19 der Analogeingabebaugruppe 17a zyklisch oder zu vorgebbaren Zeiten aus diesem Kommunikationssignal und dem Strom die Messwerte ermittelt und vergleicht. Für den Fall, dass das Vergleichsergebnis einen vorgebbaren Wert erreicht, erzeugt die Auswerteeinheit 19 ein Fehlersignal und übermittelt dieses z. B. dem Bedien- und Beobachtungssystem 3 (Figur 1), welches eine geeignete Fehlermeldung anzeigt und/oder in einer Diagnose- und/oder Instandhaltungssicht geeignete Instandhaltungsmaßnahmen einleitet. Selbstverständlich kann die Auswerteeinheit 19 derart ausgebildet sein, dass diese nicht nur im Fehlerfall ein Fehlersignal, sondern in Form eines Meldesignals in jedem Fall die Übertragungsqualität anzeigt. Ferner braucht die Auswerteeinheit 19 nicht zwingend Bestandteil der Analogeingabebaugruppe 17a sein, sondern kann Teil eines weiteren mit der Analogeingabebaugruppe 17a verbundenen Teilnehmers der Automatisierungseinrichtung sein.

Im Folgenden wird angenommen, dass das Leitungspaar 13, welches die Analogausgabebaugruppe 17b mit dem Aktuator 15 verbindet, zu überwachen ist. Dazu übermittelt die Analogausgabebaugruppe 17b dem Aktuator 15 sowohl ein einen Sollwert repräsentierendes Stromsignal als auch ein diesem Sollwert repräsentierendes, dem Stromsignal überlagertes digitales Kommunikationssignal. Der Aktuator ermittelt aus diesen Signalen die Sollwerte, vergleicht diese und für den Fall, dass das Vergleichsergebnis einen vorgebbaren Wert erreicht, zeigt der Aktuator 15 einen Fehler an.

Der Aktuator kann auch derart ausgebildet sein, dass dieser lediglich der Analogausgabebaugruppe 17b ein dem Vergleichswert repräsentierendes digitales Kommunikationssignal übermittelt, wobei die Analogausgabebaugruppe 17b oder ein mit dieser Analogausgabebaugruppe 17b verbundener Teilnehmer der Automatisierungseinrichtung einen Fehler anzeigt, falls das Vergleichsergebnis einen vorgebbaren Wert erreicht.

## Patentansprüche

1. Verfahren zur Überwachung eines Übertragungsmediums (12, 13), über welches ein erster Teilnehmer (11) mit einem zweiten Teilnehmer (14) verbindbar ist und über welches ein Stromsignal und ein diesem Stromsignal überlagertes digitales Kommunikationssignal übertragbar sind, **gekennzeichnet durch** folgende Verfahrensschritte:
- einer der Teilnehmer (11; 14, 15) übermittelt dem anderen Teilnehmer (11; 14, 15) ein einen Wert repräsentierendes Stromsignal und ein diesen Wert repräsentierendes digitales Kommunikationssignal,
- der empfangende Teilnehmer (11; 14, 15) ermittelt aus dem Stromsignal und dem Kommunikationssignal die Werte, wobei dieser Teilnehmer (11; 14, 15) oder ein mit diesem Teilnehmer (11; 14, 15) verbundener weiterer Teilnehmer die Werte vergleicht.

2. Verfahren nach Anspruch 1, **dadurch gekennzeichnet, dass** in Abhängigkeit des Vergleichsergebnisses ein Fehler oder eine Meldung angezeigt wird.

3. Anordnung mit einem ersten Teilnehmer (11) und mit einem über ein Übertragungsmedium (12, 13) mit dem ersten Teilnehmer (11) verbundenen zweiten Teilnehmer (14), wobei über das Übertragungsmedium (12, 13) ein Stromsignal und ein diesem Stromsignal überlagertes digitales Kommunikationssignal übertragbar sind, **dadurch gekennzeichnet, dass** zur Überwachung des Übertragungsmediums (12, 13)
- einer der Teilnehmer (11; 14, 15) dem anderen Teilnehmer (11; 14, 15) ein einen Wert repräsentierendes Stromsignal und ein diesen Wert repräsentierendes digitales Kommunikationssignal übermittelt,
- der empfangende Teilnehmer (11; 14, 15) aus dem Stromsignal und dem Kommunikationssignal die Werte ermittelt, wobei dieser Teilnehmer (11) oder ein mit diesem Teilnehmer (11; 14, 15) verbundener weiterer Teilnehmer die Werte vergleicht.

4. Anordnung nach Anspruch 3, **dadurch gekennzeichnet, dass** der empfangende Teilnehmer (11; 14, 15) oder der mit diesem Teilnehmer (11; 14, 15) verbundene weitere Teilnehmer in Abhängigkeit des Vergleichsergebnisses einen Fehler anzeigt oder das Vergleichsergebnis einem Teilnehmer übermittelt, welcher in Abhängigkeit des Vergleichsergebnisses einen Fehler oder eine Meldung anzeigt.

5. Ein für eine Anordnung nach Anspruch 3 oder 4 geeigneter Teilnehmer (11; 14, 15), welcher dazu ausgebildet ist, ein einen Wert repräsentierendes Stromsignal und ein diesem Stromsignal überlagertes diesen Wert repräsentierendes digitales Kommunikationssignal über ein Übertragungsmedium (12, 13) zu empfangen, wobei zur Überwachung des Übertragungsmediums (12, 13) der Teilnehmer (11; 14, 15) ferner dazu ausgebildet ist, aus dem Stromsignal und dem Kommunikationssignal die Werte zu ermitteln und diese Werte zu vergleichen.

6. Teilnehmer nach Anspruch 5, **dadurch gekennzeichnet, dass** der Teilnehmer (11; 14, 15) ferner dazu ausgebildet ist, einen Fehler in Abhängigkeit des Vergleichsergebnisses anzuzeigen oder das Vergleichsergebnis einem Teilnehmer zu übermitteln.

## Claims

1. Method for monitoring a transmission medium (12, 13), via which a first device (11) can be connected to a second device (14), and via which can be transferred a current signal and a digital communications signal superimposed on this current signal, **characterised by** the following method steps:
- one of the devices (11; 14, 15) transfers to the other device (11; 14, 15) a current signal representing a value, and a digital communications signal representing this value,
- the receiving device (11; 14, 15) determines the values from the current signal and the communications signal, where this device (11; 14, 15) or an additional device connected to this device (11; 14, 15) compares the values.

2. Method according to claim 1, **characterised in that** a fault or a message is reported depending on the comparison result.

3. Arrangement having a first device (11) and having a second device (14) connected to the first device (11) via a transmission medium (12, 13), where a current signal and a digital communications signal superimposed on this current signal can be transferred via the transmission medium (12, 13), **characterised in that** in order to monitor the transmission medium (12, 13)
- one of the devices (11; 14, 15) transfers to the other device (11; 14, 15) a current signal representing a value, and a digital communications signal representing this value,
- the receiving device (11; 14, 15) determines the values from the current signal and the communications signal, where this device (11) or an additional device connected to this device (11; 14, 15) compares the values.

4. Arrangement according to claim 3, **characterised in that** the receiving device (11; 14, 15) or the additional device connected to this device (11; 14, 15) reports a fault depending on the comparison result, or transfers the comparison result to a device, which reports a fault or a message depending on the comparison result.

5. Device (11; 14, 15), which is suited to an arrangement according to claim 3 or 4, which is designed to receive a current signal representing a value, and a digital communications signal superimposed on this current signal and representing this value via a transmission medium (12,13), with the device (11; 14, 15) also being designed to determine the values from the current signal and the communications signal and to compare these values in order to monitor the transmission medium (12, 13).

6. Device according to claim 5, **characterised in that** the device (11; 14, 15) is also designed to report a fault depending on the comparison result, or to transfers the comparison result to a device.

## Revendications

1. Procédé de contrôle d'un support de transmission (12, 13) permettant de relier un premier correspondant (11) à un deuxième correspondant (14) et de transmettre un signal de courant et un signal de communication numérique superposé à ce signal de courant, **caractérisé par** les étapes suivantes dans lesquelles :
- l'un des correspondants (11 ; 14, 15) transmet à l'autre correspondant (11 ; 14 ; 15) un signal de courant, qui représente une valeur et un signal de communication numérique qui représente cette valeur,
- le correspondant destinataire (11 ; 14, 15) détermine les valeurs à partir du signal de courant et du signal de communication, ce correspondant (11 ; 14, 15) ou un autre correspondant lié à ce correspondant (11 ; 14, 15) comparant les valeurs.

2. Procédé selon la revendication 1, **caractérisé en ce qu'**une erreur ou un message est affiché en fonction du résultat de la comparaison.

3. Système comportant un premier correspondant (11) et un deuxième correspondant (14) relié au premier correspondant (11) par un support de transmission (12, 13), un signal de courant et un signal de communication numérique superposé à ce signal de courant pouvant être transmis par le support de transmission (12, 13), **caractérisé en ce que**, pour contrôler le support de transmission (12, 13)
- l'un des correspondants (11 ; 14, 15) transmet à l'autre correspondant (11 ; 14 ; 15) un signal de courant qui représente une valeur et un signal de communication numérique qui représente cette valeur,
- le correspondant destinataire (11 ; 14, 15) détermine les valeurs à partir du signal de courant et du signal de communication, ce correspondant (11 ; 14, 15) ou un autre correspondant lié à ce correspondant (11 ; 14, 15) comparant les valeurs.

4. Système selon la revendication 3, **caractérisé en ce que** le correspondant destinataire (11 ; 14, 15) ou l'autre correspondant lié à ce correspondant (11 ; 14, 15) affiche une erreur en fonction du résultat de la comparaison ou le résultat de la comparaison est transmis à un correspondant qui affiche une erreur ou un message en fonction du résultat de la comparaison.

5. Correspondant (11 ; 14,15) approprié à un système selon la revendication 3 ou 4, lequel correspondant est conformé de façon à recevoir, par le biais d'un support de transmission (12, 13), un signal de courant qui représente une valeur et un signal de communication numérique qui représente cette valeur et qui est superposé à ce signal de courant, le correspondant (11 ; 14,15) étant en outre conformé de façon à déterminer les valeurs à partir du signal de courant et du signal de communication et à comparer ces valeurs, en vue de contrôler le support de transmission (12, 13).

6. Correspondant selon la revendication 5, **caractérisé en ce que** le correspondant (11 ; 14, 15) est en outre conformé de façon à afficher une erreur en fonction du résultat de la comparaison ou à transmettre le résultat de la comparaison à un correspondant.
